(19) Europäisches Patentamt
European Patent Office
Office européen des brevets

(11) **EP 2 693 297 A1**

(12) **EUROPEAN PATENT APPLICATION**
published in accordance with Art. 153(4) EPC

(43) Date of publication:
**05.02.2014 Bulletin 2014/06**

(51) Int Cl.:
**G06F 1/26** *(2006.01)* **G06F 1/32** *(2006.01)*
**G06F 1/04** *(2006.01)* **G06F 1/14** *(2006.01)*
**G06F 9/46** *(2006.01)* **G06F 1/12** *(2006.01)*
**G01R 21/00** *(2006.01)* **G06F 19/24** *(2011.01)*

(21) Application number: **12763031.7**

(22) Date of filing: **19.03.2012**

(86) International application number:
**PCT/BR2012/000069**

(87) International publication number:
**WO 2012/129623 (04.10.2012 Gazette 2012/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2011 BR PI1101401**

(71) Applicant: **Instituto Alberto Luiz Coimbra de Pós Graduação E Pesquisas
Rio de Janeiro RJ 21949-900 (BR)**

(72) Inventors:
• **DE AMORIM, Luis Cláudio**
 **CEP:21930-041 Larangeria RJ (BR)**
• **DUTRA, Diego Leonel Cadette**
 **CEP: 26260-470 Nova Iguaçu RJ (BR)**
• **WHATERLY, Lauro Luis Armondi**
 **CEP:22231-080 Rio de Janeiro RJ (BR)**

(74) Representative: **Johansson, Lars E.**
 **Hynell Patenttjänst AB
 P.O. Box 138
 683 23 Hagfors (SE)**

(54) **STRICTLY INCREASING VIRTUAL CLOCK FOR HIGH-PRECISION TIMING OF PROGRAMS IN MULTIPROCESSING SYSTEMS**

(57) The present invention relates to a method of building virtual clocks that guarantee strictly increasing and high precision timekeeping of programs executed on multiprocessor systems. Specifically, a multiprocessor system is defined as a computing system composed of multiple processing units, where a processing unit is formed of multiple processor cores which operate asynchronously with each other. In addition each processor core has a time counter and operates with one of multiple operating frequencies and can change the operating frequency dynamically. The method builds a high-precision Strictly Increasing Virtual Clock (SIVC) on top of a computer system's time counter which is used as the reference time counter to which a control layer is implemented for capturing the system events that can advance or delay the elapsed time count of system clocks. In this way, SIVC can provide to the computer system a time counter which produces strictly increasing and high-precision values. A program will access SIVC information by using either an operating system call or a hardware instruction. A computer program will create a SIVC on top of a selected computer system's time counter and by isolating it from differences in time count caused by internal changes of the computer system such as internal replacements of a time counter by the system. The present invention guarantees that the SIVC values are strictly increasing and highly precise.

Figure 4

**Description**

FIELD OF INVENTION

This invention relates to the correct, precise, and strictly increasing time count of program execution on computer systems composed of multiple processing units each of which comprises multiple processor cores where each processor core has a time counter and multiple operating frequencies; besides, each of the processor cores works asynchrously with each other and can change dynamically its operating frequency. This invention belongs to the field of computer systems composed of an operation system and multiple processing units formed of so-called multicore processors and which are interconnected by using either a shared bus to main memory or a communication network.

BACKGROUND

A computer system with a central processing unit (CPU) typically provides a counter of CPU clock cycles which can serve as a precise reference for measuring the elapsed time of program execution. To this end, a CPU internal counter is available which is incremented either every T seconds, where T=1/F and F is the CPU operating frequency in Hertz or periodically by interrupts of the computer system. This system time counter or simply system clock, is used by the computer system to measure the total time of program execution by calculating the time difference between the values of system clock at the beginning and the end of program execution. However, a CPU can be shared by multiple programs, in which each program is selected in turn to use a fraction of CPU time until the end of program execution. In this case, the program's execution time is the sum of time intervals in which the CPU was allocated for the program. In this case of shared CPU by multiple programs, the system clock is also used to measure the total CPU time dedicated to each of the programs.

An execution time interval is the difference of system clock values immediately before a program receives the CPU execution control from the operation system and immediately after the program returns that control to the operation system. When a CPU is shared, the operation system generally uses two time counters, a counter of execution time and a counter of execution duration for the execution of each program, process, or task, and uses a system clock as the source of time information.

However, the execution of a program can be interrupted frequently and asynchronously by different events of the computer system which are not precisely accountable by the systems clocks such as interrupts of the input/output system which have variable duration, and lost interrupts. By accumulating time inaccuracies in the system due to such system events, then the count of execution time of programs will inappropriately add or subtract time if such system clocks are used, thus making imprecise the measurement of the execution time of computer programs.

An alternative which is commonly used to correct the discrepancy generated by a system clock is to periodically synchronize its current value with that of another time counter that is free from such system events that affect the precision of program timing. Nevertheless, the problem of precise timekeeping is still more complex in modem computer systems because they add other characteristics that limit and often prevent precise measurement of the elapsed time between two successive events during the execution of a program, process, or task by using the available hardware and software, which further increases the imprecision of program timekeeping by using the system clocks.

Specifically, a modem computer system is composed of an operation system and a plurality of processing units, with each processing unit comprising a plurality of processor core, where each processor core has a time counter and works with one of multiple operating frequency asynchronously with the operating frequency of each other; besides, a processor core can dynamically alter its operating frequency by means of the frequency scaling mechanism used by the operation system. However, a computer system cannot use the internal circuits of a processor core to assess precisely the execution time of a program due to the time discrepancy caused by the referred system events.

Owing to this, such systems require that the time measurements be implemented with assistance of secondary circuits external to the processor core, e.g., using timers such as Real Time Counter (RTC) and High Precision Event Timers (HPET). In this situation, while the internal circuits of a processor core work by updating its time counter isolated from the external system work, the secondary circuits operate by generating interrupts at a fixed frequency, which are intercepted and used by the processor core to update a time counter in main memory.

This way, the time counter in main memory will be free from system events that affect time count. Nevertheless, an external time counter used as a clock by the system, will present a discrepant value of elapsed time relatively to the clock's initial value, because of the access latency to main memory and lost interrupts which are not accounted for the system time. Thus, it is also necessary to resynchronize the external time counter at periodic intervals by using as a reference of reliable time base such as the one offered by an atomic clock which is accessed by using a communication protocol such as the Network Time Protocol (NTP). However, using protocols such as NTP for resynchronization produces timer counters of low precision varying from milliseconds to seconds, depending on the traffic on the communication network such as the one used to access the atomic clock.

This type of problem usually occurs in clusters of computers. A solution that has been proposed is to implement a global clock to serve as a common time reference to the cluster nodes. In this case, the solution uses a synchronization algorithm combined with a hardware of high-precision timer circuit located in a central cluster node. A global clock can be entirely built using hardware, software, or a combination of both. In software global clocks, it is necessary to resynchronize them periodically. To avoid such a resynchronization, hybrid solutions have been proposed as well as hardware solutions that use a single remote oscillator to all of the local clocks; so resynchronization is avoided at the cost of using a specialized hardware.

Typically, a computer system has multiple time clocks or time counters which are used as global clocks or virtual clocks for the purpose of counting the execution time of every program by the operation system. In the case of only one of existing clocks of a computer system is used to measure the elapsed time then it is assumed that the computer system has a global clock. In contrast, a virtual clock is exclusively associated with the advance of execution time of a single program; this way, a virtual clock is different from the global clock of a computer system.

The patent USPTO 7155629 B2 (2004/0205368 A1) presents a method for maintaining virtual clocks (VCs) named Virtual Real Time Counters (VRTCs). VRTCs are software clocks for partitioned computer systems (e.g., virtual mahines) using a global clock such as RTC (Real Time Clock).

The referred method comprises a mechanism that whenever a partition changes the current value of global clock, it updates the VRTCs in order to keep their values coherent. Furthermore, the method assumes the existence of a single global clock for the computer system under which all the VRTCs are built and mantained, and also that the existence of a management system of all virtual partitions which updates all of their VRTCs in case of any change of the global clock. We notice that such a method is based on a global clock like RTC, thus it cannot avoid the variations of elapsed time count due to the above system events and thus it requires an external mechanism for resynchronization purposes. However, the use of an external resynchronization mechanism cannot guarantee that successive readings of global clock or virtual clock return values that are strictly increasing and highly precise. Observe that a time clock is strictly increasing if the values v0 and v1 of clock readings over two successive times t0 and t1 (t1>t0), respectively, are such that v1>v0, and is monotonically increasing if v1>=v0.

The patent USPTO 7228243 B2 presents a method for mantaining a global system clock monotonically increasing and highly precise in computer systems. The method comprises a mechanism in the operation system which stores, makes available, and keeps consistent a monotonically increasing global clock to the programs executing on computer systems. To this end, the method requires that the operation system stores the last read value of the high-precision hardware counter within 10 ms intervals. Whenever a reading request for the global system clock occurs, the method's reading mechanism effects the reading of such a hardware counter and returns the greatest value between the current reading and the value stored by the operation system in the last time interval. We notice that the method is based on a high-precision global clock which works with an asynchronous circuit that generates interrupts, thus it cannot avoid time variations caused by lost interrupts nor imprecisions on time intervals between interrupts, and thus depends on na external mechanism for resincronization purposes. However, the use of external resynchronization mechanism cannot guarantee that successive readings of global clock or virtual clock return values that are strictly increasing and highly precise.

The patent USPTO 2009/0251367 (WO 2004/088880, US2004/0190378, US 2008/0018530) presents a method of building a virtual clock (VC) which estimates an absolute time variation in mobile systems by using at least two external remote clocks, one of which is a GPS and the other is a secondary remote counter capable of providing information on relative time (e.g., Radio Base Station). The method uses absolute time values received from the GPS, and relative time values from the remote counter, to estimate absolute time variations which are used by the mobile device. However, due to the long time intervals between GPS readings the mobile devices will receive low precision estimates. Therefore, the referred method provides low precision time values and cannot avoid variations in the elapsed times, e.g., given two successive times t0 and t1, and two readings v0 and v1of values of time counter from the mobile device, respectively, the method cannot guarantee that the value of v1 is strictly greater than the value of v0 if an update of absolute time occurs by using the GPS between t0 and t1.

The patent USPTO 6550015 B1 describes a method of building time clocks of virtual RTC type with minimum hardware support, where such virtual clocks are composed of an area of memory local and a hardware global clock which is incremented at fixed rates; besides, the memory area associated with a virtual clock is updated by using the number of elapsed cycles. The proposed mechanism allows to create multiple clocks that generate interrupts of the computer system at multiple rates of increment of a global clock. The mechanism assumes a shared global clock among all the instances of virtual clocks that are created. We note that such a virtual clock aims at working similarly to the RTC, and that the use of it to assess time suffers from the same problems described before, since that it will also require an external resynchronization mechanism like NTP. However, the use of external resynchronization mechanism cannot guarantee that successive readings of global clock or virtual clock return values that are strictly increasing and highly precise.

The patents USPTO 7475002 B1 and 2007/0033589 A1 present two methods for resynchronization of virtual clocks (VC) with the global clock of a computer system. Both patents have resynchronization mechanisms which start working whenever the time difference between the value of VC and the value of the global clock becomes superior to a defined value or limit. The two methods deal with recovering lost interrupts generated by a global clock. In the scenario of both methods there exists a mechanism responsible for assessing the lost interrupts of global clock by the virtual machines and based on such assessment the lost interrupts are generated again but using a higher rate than that of real rate of the global clock. We observe that an approach to time clocks based on interrupts makes the interrupt lost or the resynchronization of such time clocks over the time execution of resynchronization mechanism, to distort readings of the virtual clock. Furthermore, since that both patents assume time clocks based on interrupts as global clocks, they require an external resynchronization mechanism like NTP. However, the use of external resynchronization mechanism cannot guarantee that successive readings of global clock or virtual clock return values that are strictly increasing and highly precise.

Also, we observe that resynchronization procedures increase the error imposed on time measurements, even under ideal conditions. For example, a processor core executing under heavy workload, then an external clock like NTP only can maintain low precision of order of seconds for the purpose of timekeeping functions of computer systems.

In computer systems with multiple processor cores, a solution that has been adopted is to enforce all the processor cores to work at the same operating frequency, which limits the use of dynamic voltage and frequency scaling (DVFS) mechanisms that allow the processor cores to work at different operating frequencies. DVFS mechanisms are used to control the energy consumption and heat dissipation on modem processors by allowing exactly to not enforce the use of only a single operating frequency to all the processor cores. Therefore, new methods for timekeeping are necessary to support the change of operating frequencies of a processor in such a way to guarantee the correct, high precision, strictly increasing timekeeping of programas executed on modem computer systems.

The state-of-technique as we previously described, showed that existing solutions propose virtual clocks or global clocks which can only offer low precision time values. In contrast, our method corrects such a failure by guaranteeing that using our method of building global clocks and virtual clocks, successive readings of such clocks will always return strictly increasing and high-precision time values.

## SUMMARY OF THE INVENTION

The present invention refers to a method of building virtual clocks for high-precision timekeeping of programs in multiprocessor systems composed of an operation system and a plurality of processing units interconnected either by a shared bus to main memory or an interconnection network, where each processing unit is formed of a plurality of processor cores.

The referred method allows the operating frequency of the processor cores to be adjusted independently of each other without interfering with the time measurements of other programs as well as to migrate program execution between processor cores working at different operating frequencies, while guaranteeing the correct and high-precision timekeeping of migratory programs.

The referred method creates a Strictly Increase Virtual Clock (SIVC) by encapsulating the hardware of timing circuit, e.g., the timing circuit of processor core, and using time information associated with the SIVC previously created. The updates of an instance of SIVC are performed without external interventions in the computer system, but an external action can issue an update to a SIVC such as changes to the operating frequency of processor core associated with the SIVC. Observe that the method does not limit the number of instances of SIVC that can coexist in a computer system.

The method is implemented by using a mechanism responsible for responding the requests for reading the value of any selected instance of SIVC and guaranteeing that the returned value is strictly increasing and highly precise. To this end, the mechanism uses a memory area for storing the instances of SIVC, in addition to accessing the timing circuit of each processor core. The store area of each instance SIVC contains a control structure composed of anterior time TA and consolidated time TC. TA stores the value of instant of time read from the timer mechanism used by the associated SIVC instance. TA corresponds to the time of last event that changed the operating frequency of processor core, where the event can be alteration of operating frequency of processor core, change of timer circuit, migration of program execution between two processor cores, or other event that can affect the timekeeping of the SIVC instance. TC stores the elapsed time of its associated instance of SIVC, specifically the time difference between the instant of time at which the SIVC instance was created until the instant of of time at which occurred the last event of change associated with the SIVC instance. Note that such an instant of time is stored in TA.

Based on the values of TA and TC of a SIVC instance of a program running on a processor core with operating frequency FP and current value TP of the timer mechanism used by the SIVC instance, then the elapsed time TD can be calculated, whereTD is the elapsed time since the instant of creation of the SIVC instance until the present time. The instant of creation of the SIVC occurs by the time of initialization of computer system, creation of a program or process, or other event of interest. The value of TD is computed as follows:

$$TD = (TP\text{-}TA) * FP + TC.$$

The present method of building SIVCs or simply SIVC method described in this invention requires for its correct operation a mechanism that encapsulates the hardware circuits of timekeeping, to update the information stored in the control structure of SIVC instances whenever both the associated program migrates from current processor core NC (or origin) to another processor core ND (destination) and the processor core associated with one or more instances of SIVC changes its operating frequency FP in Hertz from an initial (or current) operating frequency FI to another operating frequency FF.

On adding such a mechanism to a computer system, then SIVC instances can provide to the the running programscorrect timekeeping information with precision of nanoseconds, thus isolating its functioning from the hardware circuit which is subject to the discrepancy of time count. In both cases it is necessary to update TC maintained by SIVC instances, where the new value of consolidated time TC' is calculated as follows:

$$TC' = (TP\text{-}TA) * FI + TC.$$

By using the SIVC method described above it is possible to maintain correct timekeeping after an instance of SIVC is created by a program, even if the operating frequency of processor core changes or the program migrates to another processor core. In other words, it suffices that the mechanism treats the requests for changing of operating frequency in order to any SIVC instance inform values that are strictly increasing and precise.The access to timekeeping information is performed by reading requests to SIVC. The request will return a time value in nanoseconds based on the current value informed by the hardware circuit and information associated with the requested SIVC.

## DETAILED DESCRIPTION OF THE PREFERRED EMBODIMENTS OF THE INVENTION

The present SIVC method can be implemented in any type of computer system for data processing. An example of computer system and the invention are presented next, where the examples are only illustrative and do not represent any limitation in relation to the type of computer system which can use SIVC method.

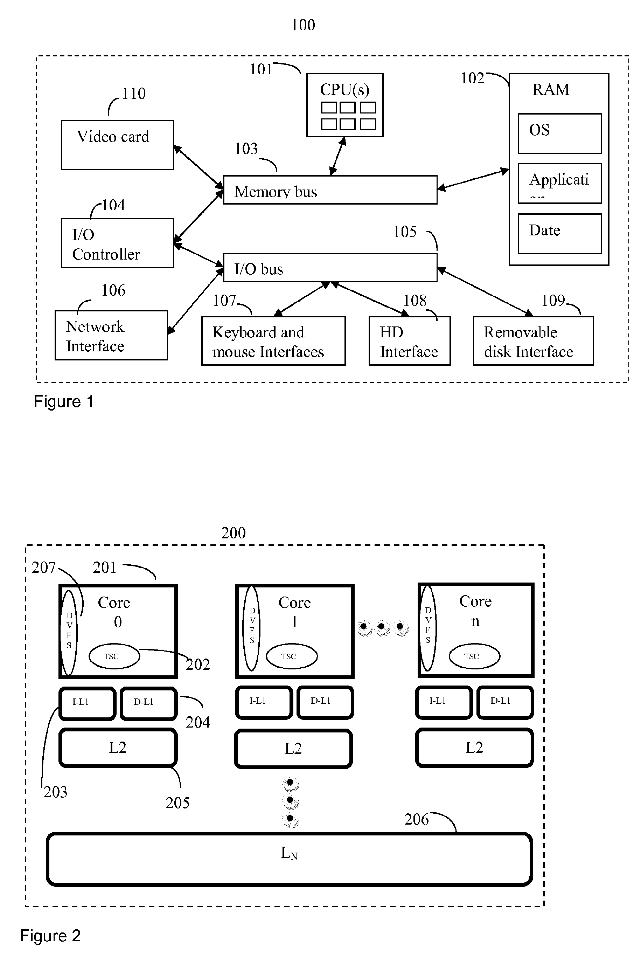

A computer system can be composed of multiple central processing units (CPUs), where each CPU can have multiple processor cores, each of which works independently of each other at an operating frequency F (in Hertz) and cycle time T=1/F, and has its own clock that is incremented at said frequency F, Figure 1. The processor cores even if they are in different processing units they can communicate using the shared memory or message passing. Without loss of generality, we can consider such a computer system having only one processing unit with two processor cores and a 3-level cache memory shared between both processor cores.

In this example, the present SIVC method is built on a set of instructions or micro-instructions and control structures stored in main memory, with one of such control structures associated with an active instance of SIVC that in the computer system.

A control structure of an instance of SIVC is composed of anterior time TA and consolidated time TC. TA stores the instant of time of the last event regarding a change related to the SIVC instance, where the value of instant of time is read through the timekeeping mechanism used by the SIVC instance. TC stores the elapsed time since the instance of SIVC was created until the instant of time of the last event of change associated with the SIVC instance.

The creation of a new instance of SIVC is requested by a running program on a processor core. Specifically, the SIVC method allocates a new control structure for the new instance of SIVC and stores zero in TC and issues a read request to the timekeeping mechanism used by the SIVC instance to obtain the initial value of TA. In this case, TA will be the value of cycle counter of processor core operating at frequency FP, which can be altered at any instant of time during the functioning of processor core.

After its creation, an instance of SIVC will keep the elapsed time of program execution correct in the presence of changes to the operating frequency of processor core as well as migrations of program execution between processor cores. The read requests for an instance of SIVC will be carried out by means of multiple instructions executed by the processor core running the program. The information of elapsed time TD indicated by an instance of SIVC is calculated by using the data stored in the control structure associated with the SIVC, i.e., values of TA and TC, the current value of TP (time counter of processor core), and current operating frequency FP of the processor core. TD is computed as follows:

$$TD = (TP\text{-}TA) * FP + TC.$$

The present SIVC method is composed of a procedure to update the elapsed time of a program by capturing all the changes which can occur in a processor core and interfering with the elapsed time count, such as changes to the operating frequency of processor core and program migrations between processor cores over the program execution. On detecting and processing events of request for operating frequency change and processor core migration, the control mechanism of SIVC will store and update the necessary information of SIVC instances to guarantee the correct functioning of elapsed time count of SIVC instances which otherwise would be affected by those events.

Whenever a request for alteration of operating frequency of a processor core occurs, the SIVC method will capture such a request and it will guarantee the consistency of control structures of SIVC instances which use the processor core's time counter. This action of consistency is performed by updating the values of TC and TA of control structure of all the instances of SIVC which will be affected by the change of processor core 's operating frequency from FI to FF.

The consistency procedure will calculate a new value of consolidated time TC' related to the instant of time in which the alteration of operating frequency will occur and will update TA with the current value of TP of the time counter of processor core that will have its operating frequency modified. The new value of TC' of all the affected instances is calculated as follows:

$$TC' = (TP\text{-}TA) * FI + TC.$$

The migrations of program execution between processor cores over the execution time of the program are captured in order to guarantee consistency of the control structures of SIVC instances of the migratory program. The consistency is performed similarly to the case of changes to the operating frequency of processor core, by updating the values of TC and TA in the control structures of SIVC instances associated with the program. The procedure to guarantee consistency of SIVC control structures requires the current value of operating frequency of processor core of origin NC and the current value of processor core's time counter TP. The new value of consolidated time TC' of all the affected SIVC instances is calculated by the following equation:

$$TC' = (TP\text{-}TA) * FP + TC.$$

Next, the migration procedure of SIVC method will update the value of TA with the value of time counter TP of the destination processor core ND and will place the migratory program at the top of program queue of ND. The migration procedure will complete after passing the execution of control flow to the scheduler of the operaion system of ND which will be responsible to decide which program should be next executed by ND.

In addition to the building example of SIVC described above, the SIVC method can be built in several other manners due to the diversity of components present in current computer systems. The variety of available components allows to build mechanisms of SIVC method in different ways even in a single implementation of the SIV method, where the form of which each of the mechanisms and procedures to be built depends only on the wish of the system designer and availability of computer resources.

INVENTION OBJECTIVES

The objectives of invention comprise:

A method of building and maintaining of virtual clocks which provide strictly increasing and highly precise time measurements of programs executed on computer systems subject to changes that affect the program timekeeping such as program migrations between processor cores or alterations of operating frequency of processor cores, the method comprising the following procedures:

- A procedure to create an instance of SIVC or other timekeeping mechanism under which other SIVC instances will be created;
- A procedure of updating the value of elapsed time of a plurality of SIVC instances whenever events that affect the base timekeeping used by SIVC occur;
- A procedure of accessing an instance of SIVC to read the elapsed time counter;
- A procedure to discard an instance of SIVC previously created without affecting other SIVC instances which were not built on the removed SIVC instance;
- A procedure of migration for SIVC instances to be executed whenever an SIVC instance requires to alter the method of timer circuit under which it was created;
- A mechanism that implements the SIVC method in computer systems;
- Supporting mechanisms of timekeeping for real-time systems;
- Implementations of SIVC method using hardware, software, or a combination of both.

Next, we describe a preferential application of the invention, and noting that the description does not limit the use and the scope of the invention.

Considers a program of data distribution in real time [e.g., video streams], composed of tasks that execute concurrently, where the task execution should attend a pre-defined time limit to guarantee quality of service (e.g., to not interrupt exhibition of a video). Furthermore, the time limits of task execution should be attended so that the application should regularly effect time measurements using the hardware timer to quantify the elapsed time of execution and select the next task to be executed. Assume that the computer system that executes the application is composed of two processor cores, named core1 and core2.

Suppose that after the first minute of execution core2 reduces its operating frequency by half (50%) of its value and that core2 initially executes a real-time program. Also, the real-time program migrates from core1 to core2 as a result of load balancing procedure of the computer system. Given that the operating frequencies of the two processor cores are different, so will be the values of their local time counters, thus, making unfeasible the real-time program to use indistinctly the values of those time counters for correct timekeeping purposes.

In this situation, by using the present invention, the correct timekeeping will be guaranteed by using a SIVC instance associated with the migratory real-time program to neutralize the interferences on timekeeping caused by program migrations between processor cores. Specifically, with the SIVC the alteration of processor core and thus of associated timekeeping circuits, is captured and will lead both the migration procedure to be executed as well as the procedure of updating the internal control structures of SIVC, thus hiding the change of timekeeping circuits from the real-time program. Afterwards, when the program issues a read request for SIVC to obtain time information, then the time information will be calculated based on current value of the new hardware counter together with information stored in the control structures of the SIVC virtual clock.

In addition to the above scenario changes of operating frequency can occur over the program execution on a processor core, although those changes do not represent a problem within the scope of invention. In such cases, it will occur a procedure for changing the operating frequency such that it will update the control structures of SIVC.

BRIEF DESCRIPTION OF THE DRAWINIGS

Figures 1-5 are presented to provide better understanding of the invention.

Figure 1 - illustrates one of possible computer system architectures in which the SIVC (Strictly Increasing Virtual Clock) method can be used.

Figure 2 - illustrates a computer system using a processing unit with multiple core units.

Figure 3 - illustrates the change of operating frequency of processor core by the procedure built for the SIVC method.

Figure 4 - illustrates the migration of processor core by the procedure built for the SIVC method.

Figure 5 - illustrates a processing units with multiple processor cores and hardware support for implementing the SIVC method.

Figure 1 is a block diagram that illustrates an architecture of computer system to which the invention is to be built.

A computer system **100** is composed of a plurality of central processing unit (CPU) **101,** where each CPU has a plurality of processor core (see **200** Figure 2) and communicates to main memory **102** using a memory bus **103.** Other devices are connected to the Input/Output (I/O) bus **105,** and are connected to the memory bus **103** by using the I/O controller **104** except for the video card **110** which connects to the memory bus directly **103.**

This way, when an I/O device (network interface 106, keyboard and mouse interfaces 107, hard disk (HD) interface 108, removable disk interface 109) wishes to communicate with a CPU 101 or main memory 102, the I/O device should use the I/O bus 105 to communicate with the I/O controller 104. Then the I/O controller 104 will Access the memory bus to execute the task the device requested. For example, the SIVC method can use CPU 101 and RAM memory 102 to create and maintain the necessary information to the functioning of the strictly increasing virtual clock.

Figure 2 presents a block diagram of CPU with a processing unit composed of multiple processor cores.

CPU **200** is composed of multiple processor cores **201,** in which each processor core contains a private cycle counter TSC **202,** level-1 instruction cache (I-L1) **203,** Level-1 data cache (D-L1) **204** and Level-2 private cache (L2) **205.** The Level-n memory cache (Ln) **206** is shared by all the processor cores. Observe that Figure 2 only intends to show by example a possible organization of a processing unit with multiple processor cores and an organization of cache memories, although practical implementations can modify such an organization. It is important to notice that such an omission does not affect the general description of processing unit with multiple processor cores. Finally, those intermediary levels can be composed of private, shared, or hybrid memory, which is a private memory that communicates with caches at the same level of other processor cores. The last-level memory cache 206 is either shared or hybrid, and the former may have uniform access. Each processor core **201** has at least an internal clock (TSC) **202** which increments its value at the end of every processing cycle. The circuit of Dynamic Voltage and Frequency System (DVFS) **207** is responsible for changing the duration of processing cycle, by modifying the operating frequency of processor core during its operation.

The circuit TSC **202** of processor core is initialized with value zero when the processor core is switched on. The value of TSC can be read by using a processor instruction to store the current value of TSC in either a register or a memory address.

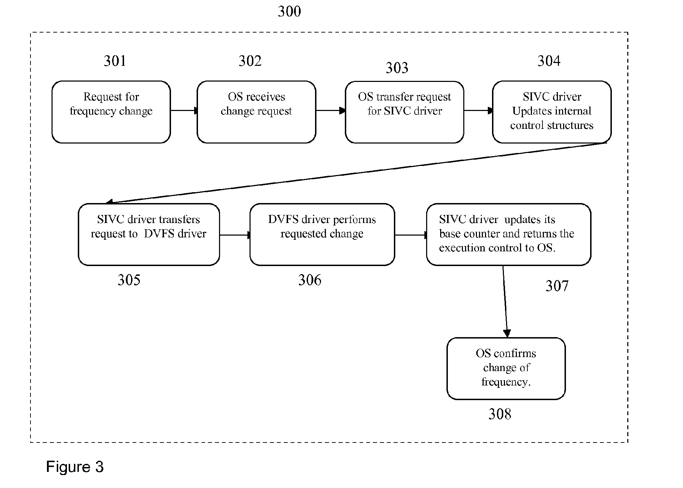

Figure 3 is a block diagram which illustrates the changing procedure of operating frequency with SIVC support.

The changing procedure of operating frequency with SIVC support **300** is composed of multiple steps which are executed by different sub-systems in a computer system. In Figure 3, the requester of change of frequency **301** will be either the operation system or an user program. Once the request is issued, it will be received by the operation system (OS) **302** which will transfer it to the SIVC driver **303**. The SIVC driver will become the responsible for managing the procedure of changing frequency of processor core, for which the driver will update the internal control structures of SIVC **304,** by accounting at this step the elapsed time of processor core execution which will have its operating frequency changed. The SIVC driver will send the request for changing the operating frequency to the DVFS driver **305,** which will perform the necessary actions for changing the operating frequency **306**. After changing the operating frequency, the control of execution flow will return to the SIVC driver **307** to complete the necessary updates in its internal data structures and inform the OS that the requested change was performed. Then the OS will inform to the requester that the operating frequency of processor core was successfully changed **308.**

The support to the invention is accomplished with the introduction of steps **303, 304, 305 e 307** into the procedure of changing operating frequency of processor core. Observe that while the procedure was explained for DVFS, this does not prevent that the procedure be also used with other mechanism of changing the operating frequency of processor core.

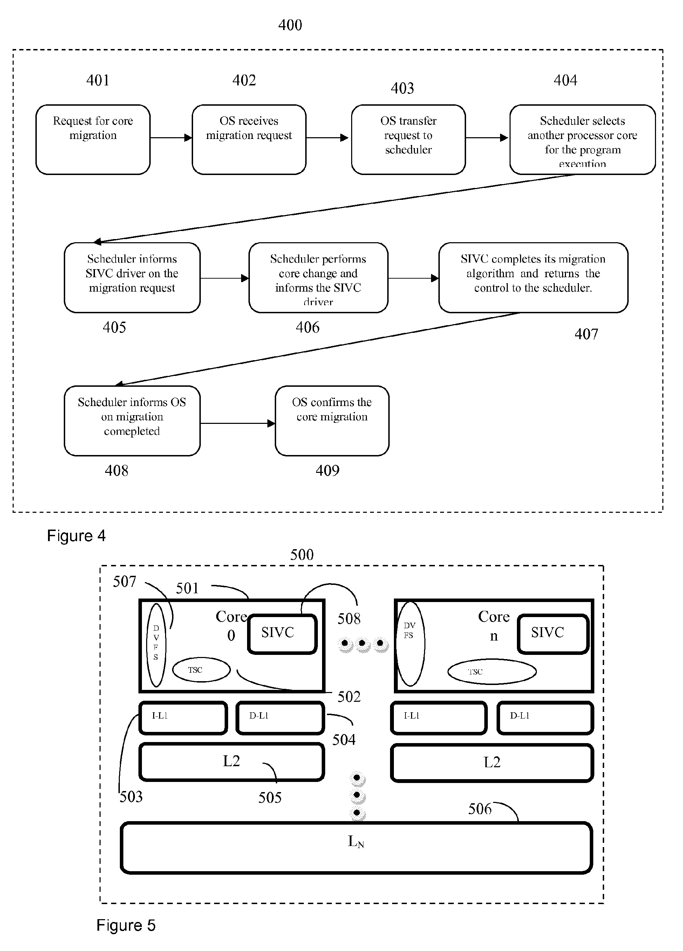

Figure 4 shows a block diagram that illustrates the mechanism of migration of programs and processes between processor cores with support for an instance of SIVC.

The procedure of program migration between processor cores with support to SIVC 400 is composed of multiple steps which are executed by the different subsystems of computer system.

Figure 4 presents an implementation of that feature in computer system with multiple processor cores. The issuer of a request for migration of processor core **401** can be either an user program or the operation system. In both cases, the operation system receives the request for migration **402** and forwards it to the scheduling subsystem **403,** which in the present organization is responsible for executing the program between processor cores. The scheduler is responsible for selecting the new processor core to which the program or process will migrate **404** and once the decision is taken, the scheduler will inform the SIVC driver that a migration between cores will take place. The SIVC drive will start the migration algorithm and return the control of execution flow to the scheduler **405.** After which the scheduler will perform the program migration between processor cores and will inform SIVC driver on completion of migration **406.** Next, SIVC driver will complete the migration algorithm, update the control structures 407, and return the execution control to the scheduler. Then, the scheduler will place the migratory program into one of its execution queue and inform the OS that the migration was concluded successfully 408. Finally, the OS will inform the issuer on the migration completion **409.**

Figure 5 shows a block diagram that presents in detail a processor with multiple processor cores and hardware support for the SIVC method.

CPU **500** is composed of multiple processor cores **501,** in which each processor core contains a private cycle counter TSC **502,** level-1 instruction cache (I-L1) **503,** Level-1 data cache (D-L1) **504** and Level-2 private cache (L2) **505.** The Level-n memory cache (Ln) **506** is shared by all the processor cores. Observe that Figure 5 only intends to show by example a possible organization of a processing unit with multiple processor cores and an organization of cache memory levels, although practical implementations can modify such an organization. It is important to notice that such omission does not affect the general description of a processing unit with multiple processor cores. Finally, those intermediary levels can be composed of private, shared, or hybrid memory, where the latter is a private memory that communicates with caches at same level in other processor cores. The last-level memory cache 506 is either shared or hybrid, where the former may have uniform access. Each processor core **501** has at least an internal clock (TSC) **502** which increments its value at the end of each processing cycle. The circuit of Dynamic Voltage and Frequency System (DVFS) **507** is responsible for changing the duration of the processing cycle, by modifying the operating frequency of processor core during its operation.

The circuit TSC **202** of a processor core is initialized with value zero. The value of TSC can be read by using a processor core instruction which will store the current value of TSC in either a register or a memory address.

The control circuit and control structure of SIVC **508** is responsible to build a strictly increasing and precise time counter for the processor core, to which the control circuit should be able to access TSC **502,** and based on the value of TSC, to calculate the value for timekeeping of the processor core. The control structure of SIVC **508** stores information such as the number of processor core cycles informed by TSC 502 at the last alteration of the processor core that affected the timekeeping of said processor core, and the value of consolidated time of execution of said processor core up to the instant of said last alteration, by using two dedicated register to these tow purposes.

INDUSTRIAL APPLICATION

The invention has an immediate application within the mobile and on-demand computing industry, in which exists the requirement of reducing the amount of energy spent by the processing unit in periods of low processor demand while not interfering with the timekeeping of running applications. It is noticeably the increasing use of so-called multicore processors by mobile devices **101** in which the method of increasingly virtual clock (SIVC) of present invention will offer more flexibility for load balancing among processor cores and providing greater chances to reduce the operating frequency or even to switch off some of the processor cores. Furthermore, the procedure 300 and 400 can be built without the presence of a central operation system. The processing unit 500 can have the control logic of SIVC built entirely into the hardware of the processor core as well as the control logic of SIVC can be implemented into a dedicated hardware which is external to the processor core or even implemented via an operation system.

The present SIVC method can be used to build new electronic equipments that have specific limitations on energy consumption, and require precise timekeeping for correct operation. Other applications of SIVC method are time maintenance of program execution on computer systems and building of processor cores that are energy efficient that is processor cores which change its operating frequency accordingly to the workload assignment.

**Claims**

1. A method of building a plurality of strictly increasing virtual clock for a computer system with a plurality of processing unit, said processing unit is composed of a plurality of processor core and an operation system and a plurality of program stored in main memory, said processor core is composed of a time counter and a plurality of register and a plurality of control structure and a plurality of operating frequency, said method comprising the steps of :

   receiving an address of said main memory and a request for building an instance of said strictly increasing virtual clock SIVC and control flow of execution from said program executing on processor core NC of said processing unit, said processor core NC executing at operating frequency FI of said plurality of operating frequency;
   creating said instance of SIVC at said address of memory and associating said instance of SIVC with said program, wherein said instance of SIVC is a structure of control, said structure of control is composed of anterior time TA and consolidated time TC;
   associating said operating frequency FI and said processor core NC with said instance of SIVC;
   assigning value of said time counter to said anterior time TA and value zero to said consolidated time TC;
   returning said control flow of execution and confirming said creation of said instance of SIVC to said program.

2. The method of claim 1, wherein said plurality of processing unit is connected by one of shared bus to main memory and communication network and a combination of shared bus and communication network of said computer system;

3. The method of claims 1-2, wherein said consolidated time TC is execution time of said processor core;

4. The method of claims 1-2, wherein said consolidated time TC is execution time of said computer system;

5. The method of claims 1-2, wherein said processor core increments said time counter at said operating frequency FI, said operating frequency FI is in Hertz and cycle time of said time counter is T=1/FI;

6. The method of claims 1-2, wherein said program is one of application, operating system, virtual machine, monitor of virtual machine, firmware and microprogram;

7. The method of claims 1-6 wherein said method further comprising the steps of :

   detecting change to said time counter of said processor core NC associated with said instance of SIVC, said change is one of
   replacing said operating frequency FI for another operating frequency of said plurality of operating frequency of said processor core NC;
   a request for migration of said program from said processor core NC to another processor core of said plurality of processor core of said processing unit;
   Updating said anterior time TA and said consolidated time TC of said control structure of said instance of SIVC;

8. The method of claim 7, wherein said another operating frequency is FF, said operating frequency FF is in Hertz and cycle time of said time counter is T=1/FF;

9. The method of claim 7, wherein said another processor core is ND;

10. The method of claims 1-9, wherein said program issues a plurality of read request for an instance of said SIVC;

11. The method of claim 1-9, wherein said program discards said instance of SIVC;

12. The method of claim 10-11, wherein said method supports a plurality of SIVC;

13. The method of claim 10-11, wherein said method isolates said plurality of SIVC from mutual interference; said mutual interference is one of changing operating frequency, migration of processing core and a combination of changing operating frequency and migration of processing core;

14. The method of claim 13, wherein said time counter is a hardware mechanism;

15. The method of claim 13, wherein said time counter is a software mechanism;

16. The method of claim 13, wherein said time counter is a SIVC;

17. The method of claims 14-16, wherein said SIVC generates strictly increasing and precise values of time count;

18. The method of claim 14, wherein said hardware mechanism is composed of dedicated circuit and control logic, said hardware mechanism further comprising the steps of:

> receiving a memory address and a request for building an instance of said virtual clock and control of execution flow from said program;
> building said instance of SIVC at said memory address;
> returning said flow control of execution to said program.

19. The method of claim 15, wherein said software mechanism is composed of
dedicated hardware circuit and a plurality of said register and software of control logic, said software mechanism further comprising the steps of:

> receiving control of execution flow and a request for building an instance of said SIVC from said program;
> generating an interrupt of said computer system executing an interrupt handler of said operating system;
> allocating an area of memory of said operating system;
> building said instance of SIVC in said area of memory of said operating system;
> completing said execution of said interrupt handler and returning said control flow of execution to said program.

20. The method of claim 15, wherein said software mechanism is software of control logic, said software mechanism further comprising the steps of:

> receiving control of execution flow and said request for building an instance of said SIVC by an operating system call issued by said program;

allocating an area in said main memory by said operating system;
building said instance of SIVC in said area of main memory;
associating said instance of SIVC with said program in said plurality of internal structure of said operating system and returning said control flow of execution to said program.

21. The method of claim 18 according to claim 10, wherein said read request further comprising the steps of:

> receiving a memory address and control of execution flow from said program;
> reading value of said anterior time TA and value of said consolidated time TC from said control structure of said instance of SIVC;
> reading value of said time counter TP associated with said instance of SIVC of said processor core and value of said operating frequency FI;
> calculating a value of elapsed time TD of said instance of SIVC by using said TA, TC, TP, FP; said value of elapsed time TD = (TP-TA) *FI + TC;
> storing said value of TD in said memory address; returning said control of execution flow to said program.

22. The method of claim 19, according to claim 10, wherein said read request further comprising the steps of:

> receiving a memory address and control of execution flow from said program;
> generating interrupt of said computer system and executing interrupt handler of said operating system;
> informing said memory address of said instance of SIVC to said operating system;
> reading current value of said anterior time TA and current value of said consolidated time TC of said instance of SIVC; storing said current value of TA and said current value of TC in said plurality of register of said dedicated circuit of said processor core of said program;
> reading value of said time counter TP associated with said instance of SIVC of said processor core and value of said processor operating frequency FI;
> calculating a value of elapsed time TD of said instance of virtual clock by using said TA, TC, TP, FP; said value of elapsed time TD = (TP-TA) *FI + TC;
> storing said value of TD in said memory address; completing said execution of said interrupt handler and returning said control of execution flow to said program.

23. The method of claim 20 according to claim 10, wherein said read request further comprising the steps of:

   receiving control flow of execution and an address of memory by an operating system call issued by said program;
   reading value of said anterior time TA and value of said consolidated time TC of said instance of SIVC;
   reading current value TP of said time counter associated with said instance of SIVC and reading value of said operating frequency FI of said processor core of said program;
   calculating a value of elapsed time TD of said instance of SIVC by using said TA,TC,TP and FP; said value of elapsed time TD = (TP-TA) * FI + TC;
   storing said value TD in said memory address;
   returning said control of execution flow to said program.

24. The method of claim 18 according to claim 8, wherein said hardware mechanism further comprising the steps of:

   using hardware detection of changes of operating frequency of said processor core of said time counter;
   using dedicated hardware circuit and said control logic to read value of said plurality of anterior time TA and value of plurality of consolidated time TC of said control structure of said instance of plurality of SIVC associated with said time counter;
   reading value of TP of said time counter associated with said instance of plurality of SIVC and value of said operating frequency FI of said processor core;
   calculating a plurality of value of consolidated time TC' by using said value of TP and said value of FI and a plurality of said TA and a plurality of said TC; said plurality of consolidated time TC' = (TP-TA) *FI + TC;
   storing said value TP in said plurality of said anterior time TA and said plurality of consolidated time TC' in said plurality of said consolidated time TC of said control structure of said plurality of instance of SIVC;
   replacing said value FI by said value FF of said operating frequency of said processor core.

25. The method of claim 19 according to claim 8,wherein said software mechanism further comprising the steps of:

   using hardware detection of frequency change instruction of said program executing in said processor core of said time counter to change said value FI of operating frequency FI to value FF;
generating interrupt of said computer system and executing interrupt handler of said operating system;
identifying said processor core of said time counter;
reading a plurality of value of anterior time TA and a plurality of consolidated time TC of said control structure of said instance of plurality of SIVC associated with said time counter;
reading value TP of said time counter and value of said operating frequency FI of said processor core;
calculating a plurality of value of consolidated time TC' by using said value of TP, FI and said plurality of value of TA and said plurality of value TC; said plurality of said value of consolidated time TC' = (TP-TA) * FI + TC;
storing said value TP in a plurality of said anterior time TA and said plurality of consolidated time TC' in a plurality of said consolidated time TC of said control structure of said plurality of instance of SIVC;
replacing said value FI by said value FF of said operating frequency of said processor core;
returning said control of execution flow to said program.

26. The method of claim 20 according to claim 8, wherein said software mechanism further comprising the steps of:

   receiving request for replacing value FI for value FF of said operating frequency of said processor core of said time counter by an operating system call issued by said program;
   reading a plurality of value of anterior time TA and a plurality of consolidated time TC of said control structure of said instance of plurality of SIVC associated with said time counter;
   reading value TP of said time counter and value of FI of said operating frequency of said processor core;
   calculating a plurality of value of consolidated time TC' by using said value of TP, FI, and said plurality of value of TA and said plurality of value of TC; said plurality of value of consolidated time TC' = (TP-TA) * FI + TC;
   storing said value TP in said plurality of said anterior time TA and said plurality of consolidated time TC' in said plurality of said consolidated time TC of said control structure of said plurality of instance of SIVC;
   replacing said value of FI of said operating frequency of said processor core by said value FF;
   returning said control of execution flow to said program.

27. The method of claim 18 according to claim 9, wherein said hardware
mechanism further comprising the steps of:

  using hardware detection of a request for migration of said program from said processor core NC to another processor core ND;
  reading value TP of said time counter associated with said instance of plurality of SIVC and value of FI of said operating frequency of said processor core NC;
  calculating a plurality of value of consolidated time TC' by using said value of TP and said value of FI and a plurality of TA and a plurality of TC of said plurality of instance of SIVC associated with said program; said plurality of said value of consolidated time TC' = (TP-TA) *FI + TC;
  reading said time counter TP of said processor core ND;
  storing said value of TP of said time counter in a plurality of said anterior time TA and said plurality of consolidated time TC' in a plurality of said consolidated time TC of said control structure of said plurality of instance of SIVC;
  copying said value of said plurality of register and said plurality of control structure of said processor core NC to said plurality of register and said plurality of control structure of said processor core ND;
  returning said control of execution flow to said program to said processor core ND.

28. The method of claim 19 according to claim 9, wherein said software mechanism further comprising the steps of:

  using hardware detection of request for migration of said program from said processor core NC to another processor core ND;
  generating interrupt of said computer system and executing interrupt handler of said operating system;
  reading a plurality of value of anterior time TA and a plurality of consolidated time TC of said control structure of said instance of plurality of SIVC associated of said program;
  reading said value TP of said time counter associated with said instance of plurality of SIVC and value of FI of said operating frequency of said processor core NC;
  calculating a plurality of value of consolidated time TC' by using said value TP, FI, and said plurality of TA and plurality of TC; said plurality of said value of consolidated time TC' = (TP-TA) *FI + TC;
  reading said time counter TP of said processor core ND;
  storing said value TP in a plurality of said anterior time TA and said plurality of consolidated time TC' in a plurality of said consolidated time TC of said control structure of said plurality of instance of SIVC of said program;
  copying said value of said plurality of register and said plurality of control structure of said processor core NC to said plurality of register and said plurality of control structure of said processor core ND;
  returning said control of execution flow to said program to said processor core ND.

29. The method of claim 20 according to claim 9, wherein said software
mechanism further comprising the steps of:

  receiving said request for migration of said program from said processor core NC to another processor core ND by an operating system call;
  reading a plurality of value of anterior time TA and a plurality of consolidated time TC of said control structure of said instance of plurality of SIVC of said program;
  reading said value TP of said time counter associated with said instance of plurality of SIVC and value of FI of said operating frequency of said processor core NC;
  calculating a plurality of value of consolidated time TC' by using said TP, FI, and said plurality of said TA and said plurality of said TC; said plurality of said value of consolidated time TC' = (TP-TA) * FI + TC;
  reading said time counter TP of said processor core ND;
  storing said value TP in a plurality of said anterior time TA and said plurality of consolidated time TC' in a plurality of said consolidated time TC of said control structure of said plurality of instance of SIVC of said program;
  copying said value of said plurality of register and said plurality of control structure of said processor core NC to said plurality of register and said plurality of control structure of said processor core ND;
  inserting said program at top of program queue of said processor core ND;
  executing scheduler of said operation system of said processor core ND.

30. The method of claim 18 according to claim 11, wherein said hardware mechanism further comprising the steps of:

  receiving a request from said program for discarding said instance of SIVC;
  removing said control structure associated with said instance of SIVC;
  returning said control of execution flow and confirming discard of said instance of SIVC to said program.

31. The method of claim 19 according to claim 11, wherein said software mechanism further comprising the steps of:

receiving a request from said program for discarding said instance of SIVC;
generating interrupt of said computer system and executing interrupt handler of said operating system;
removing memory area from control structure associated with said instance of SIVC and completing treatment of said interrupt;
returning said control of execution flow and confirming discard of said instance of SIVC to said program.

32. The method of claim 20 according to claim 11, wherein said software mechanism further comprising the steps of:

receiving a request from said program for discarding said instance of SIVC by an operating system call issued by said program;
removing said control structure associated with said instance of SIVC from said plurality of internal structure of said operating system;
returning said control of execution flow and confirming discard of said instance of SIVC to said program.

33. The method of claim 19 according to claims 22, 25, 28, and 31, wherein said software of control logic is an external hardware circuit to said processor core;

100

Figure 1

200

Figure 2

300

301                          302                              303                         304

```
┌─────────────────┐      ┌─────────────────┐      ┌─────────────────┐      ┌─────────────────┐
│   Request for   │─────▶│   OS receives   │─────▶│ OS transfer     │─────▶│   SIVC driver   │
│ frequency change│      │  change request │      │ request         │      │ Updates internal│
│                 │      │                 │      │ for SIVC driver │      │ control         │
│                 │      │                 │      │                 │      │ structures      │
└─────────────────┘      └─────────────────┘      └─────────────────┘      └─────────────────┘
```

```
┌─────────────────┐      ┌─────────────────┐      ┌─────────────────┐
│ SIVC driver     │─────▶│ DVFS driver     │─────▶│ SIVC driver     │
│ transfers       │      │ performs        │      │ updates its     │
│ request to DVFS │      │ requested change│      │ base counter and│
│ driver          │      │                 │      │ returns the     │
│                 │      │                 │      │ execution       │
│                 │      │                 │      │ control to OS.  │
└─────────────────┘      └─────────────────┘      └─────────────────┘
```

305                          306                              307

```
                                              ┌─────────────────┐
                                              │  OS confirms    │
                                              │  change of      │
                                              │  frequency.     │
                                              └─────────────────┘
```

308

Figure 3

15

400

| 401 | 402 | 403 | 404 |

Request for core migration → OS receives migration request → OS transfer request to scheduler → Scheduler selects another processor core for the program execution

Scheduler informs SIVC driver on the migration request → Scheduler performs core change and informs the SIVC driver → SIVC completes its migration algorithm and returns the control to the scheduler.

405    406    407

Scheduler informs OS on migration comepleted → OS confirms the core migration

408    409

Figure 4

500

507    501    508

Core 0    SIVC    Core n    SIVC

DVFS    TSC    DVFS    TSC

502

I-L1    D-L1    I-L1    D-L1

504

L2    L2

503    505

506

L_N

Figure 5

## INTERNATIONAL SEARCH REPORT

| International application No. |
| --- |
| PCT/BR2012/000069 |

**A. CLASSIFICATION OF SUBJECT MATTER**
G06F1/26 (2006.01), G06F1/32 (2006.01), G06F1/04 (2006.01), G06F1/14 (2006.01), G06F9/46 (2006.01), G06F1/12 (2006.01), G01R21/00 (2006.01), G06F19/24 (2011.01),
According to International Patent Classification (IPC) or to both national classification and IPC

**B. FIELDS SEARCHED**

Minimum documentation searched (classification system followed by classification symbols)

IPC 2006.01  G06F1/26  G06F1/32), G06F1/04), G06F1/14), G06F9/46 ), G06F1/12, G01R21/00  IPC 2011.01 G06F19/

Documentation searched other than minimum documentation to the extent that such documents are included in the fields searched

Electronic data base consulted during the international search (name of data base and, where practicable, search terms used)

**Epodoc,Google Patents**

**C. DOCUMENTS CONSIDERED TO BE RELEVANT**

| Category* | Citation of document, with indication, where appropriate, of the relevant passages | Relevant to claim No. |
| --- | --- | --- |
| Y | US 2004205368 A1 (IBM [US])<br>14 October 2004 (2004-10-14)<br>(See paragraphs 13,42 and figure 3) | 1,2 à 20,22 à 33 |
| A | (See figure 3) | 21 |
| Y | US 2009210740 A1<br>20 August 2009 (2009-08-20)<br>(See paragraph 6 and figure 1) | 24 à 33 |
| A | (See figure 1) | 21 |
| Y | US 2007067122 A1<br>22 March 2007 (2007-03-22)<br>(See figure 4 and 5)<br>------------------------------------------- | 1,2 à 20 |
| A | (See figure 4 and 5) | 21 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 7/05/2012 | 010612 |

| Name and mailing address of the ISA/**BR** | Authorized officer |
| --- | --- |
| **INPI** INSTITUTO NACIONAL DA PROPRIEDADE INDUSTRIAL<br>Rua Mayrink Veiga nº 9, 18º andar<br>cep: 20090-050, Centro - Rio de Janeiro/RJ<br>Facsimile No. +55 21 3037-3663 | **Ronaldo de Oliveira**<br>Telephone No. +55 21 3037-3493/3742 |

Form PCT/ISA/210 (second sheet) (July 2009)

| INTERNATIONAL SEARCH REPORT<br>Information on patent family members | | International application No.<br>PCT/BR2012/000069 | |
|---|---|---|---|
| US 2004205368 A1 | 2004-10-14 | JP 2004318878 A<br>JP 3888637 B2<br>KR 20040089472 A<br>KR 100603118 B1<br>US 7155629 B2 | 2004-11-11<br>2007-03-07<br>2004-10-21<br>2006-07-20<br>2006-12-26 |
| US 2009210740 A1 | 2009-08-20 | none | |
| US 2007067122 A1 | 2007-03-22 | US 7228243 B2 | 2007-06-05 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US PTO7155629 B2
- US 20040205368 A1
- US 20090251367 A
- WO 2004088880 A
- US 20040190378 A
- US 20080018530 A
- US PTO6550015 B1
- US PTO7475002 B1
- US 20070033589 A1